# EUROPEAN PATENT APPLICATION

(11) **EP 4 729 885 A1**
(43) Date of publication of application: **22.04.2026**
(21) Application number: 24831588.9
(22) Date of filing: 05.06.2024
(51) Int. Cl.: G01B 11/24

(54) **SHAPE MEASURING DEVICE AND METHOD FOR CALIBRATING SHAPE MEASURING DEVICE**

(30) Priority: 30.06.2023 JP 2023108156
(71) Applicant: Kobelco Research Institute, Inc., Kobe-shi, Hyogo 651-0073 (JP)
(72) Inventor: AKAMATSU, Masaru, Kobe-shi, Hyogo 651-2271 (JP); FURUTA, Yohei, Kobe-shi, Hyogo 651-2271 (JP); NISHIDA, Hiroto, Kobe-shi, Hyogo 651-2271 (JP); YONEDA, Nao, Kobe-shi, Hyogo 651-2271 (JP); HINO, Aya, Kobe-shi, Hyogo 651-2271 (JP); OCHI, Mototaka, Kobe-shi, Hyogo 651-2271 (JP)
(74) Representative: Müller-Boré & Partner Patentanwälte PartG mbB
(86) International application number: PCT/JP2024/020471
(87) International publication number: WO 2025/004718

(57) **Abstract**

A shape measuring device of the present invention includes an image processing unit that obtains a contour shape of a measurement target having a plate shape based on a shadow image of the measurement target disposed between an illumination unit and an imaging unit in a case of measurement, the shadow image being generated by the imaging unit imaging a shadow of the measurement target, the shadow being formed by illumination light emitted from the illumination unit. A dimming filter unit is disposed between the illumination unit and the imaging unit in a case of calibration, and an amount of illumination light emitted from the illumination unit is calibrated based on a light receiving amount of the illumination light emitted from the illumination unit and received by the imaging unit via a dimming filter unit 2.

## Description

### Technical Field

The present invention relates to a shape measuring device that measures a contour shape of a plate-shaped measurement target using illumination light and a method for calibrating the shape measuring device.

### Background Art

Conventionally, for example, as disclosed in Patent Literature 1, a known shape measuring device emits parallel light to an image sensor beyond a measurement target and measures a shape of the measurement target using a shadow image of the measurement target projected onto the image sensor.

When the measurement target is a member that is long in a traveling direction of the parallel light, diffraction fringes may be generated. When the diffraction fringes are generated, an image includes the diffraction fringes as well as the shadow image of the measurement target. Thus, an error occurs in the shape of the measurement result. For this reason, it is conceivable that the background of the image is made white due to saturation of the amount of received light in the image sensor. However, with this method, due to an excess of a dynamic range of the image sensor, the amount of the parallel light cannot be adjusted to a set value based on an output from the image sensor, and calibration cannot be performed.

### Citation List

### Patent Literature

Patent Literature 1: JP 2006-145487 A

### Summary of Invention

The present invention has been made in view of the above circumstances, and an object thereof is to provide a shape measuring device that is capable of calibrating a light amount and a method for calibrating the shape measuring device.

In a shape measuring device and a method for calibrating the shape measuring device according to the present invention, the device includes an image processing unit that obtains a contour shape of a measurement target having a plate shape based on a shadow image of the measurement target disposed between an illumination unit and an imaging unit in a case of measurement, the shadow image being generated by the imaging unit imaging a shadow of the measurement target, the shadow being formed by illumination light emitted from the illumination unit. A dimming filter unit is disposed between the illumination unit and the imaging unit in a case of calibration, and an amount of illumination light emitted from the illumination unit is calibrated based on a light receiving amount of the illumination light emitted from the illumination unit and received by the imaging unit via a dimming filter unit 2.

The above and other objects, features and advantages of the present invention will be apparent from the following detailed description and accompanying drawings.

### Brief Description of Drawings

FIG. 1 is a block diagram illustrating a configuration of a shape measuring device according to an embodiment.
FIG. 2 is a diagram for describing a retraction position of a dimming filter in the shape measuring device.
FIG. 3 is a diagram for describing a calibration position of the dimming filter in the shape measuring device.
FIG. 4 is a diagram for describing a contour shape measured by the shape measuring device as an example.
FIG. 5 is a flowchart showing an operation of the shape measuring device related to calibration.
FIG. 6 is a diagram for describing a shape measuring device according to a third modification.
FIG. 7 is a diagram for describing a measurement target measured by the shape measuring device according to the third modification.
FIG. 8 is a diagram for describing a contour shape measured by the shape measuring device according to the third modification as an example.

### Description of Embodiments

Hereinafter, one or a plurality of embodiments of the present invention will be described with reference to the drawings. However, the scope of the invention is not limited to the disclosed embodiments. Note that in the drawings, the same reference signs denote the same components, and description thereof will be appropriately omitted. In the present specification, when components are collectively referred to, the components will be denoted by reference signs with suffixes omitted, and when components are individually referred to, the components will be denoted by reference signs with suffixes.

A shape measuring device according to the embodiment includes an illumination unit, an imaging unit, and an image processing unit that obtains a contour shape of a plate-shaped measurement target disposed between the illumination unit and the imaging unit in a case of measurement, based on a shadow image of the measurement target, the shadow image being generated by the imaging unit imaging a shadow of the measurement target, the shadow being formed by illumination light emitted from the illumination unit. This shape measuring device includes a dimming filter unit disposed between the illumination unit and the imaging unit in the case of calibration, and a calibration unit that calibrates an amount of illumination light emitted from the illumination unit, based on a light receiving amount of the illumination light emitted from the illumination unit and received by the imaging unit via the dimming filter unit. Hereinafter, such a shape measuring device and a method for calibrating the shape measuring device, the method being mounted on the device will be described more specifically.

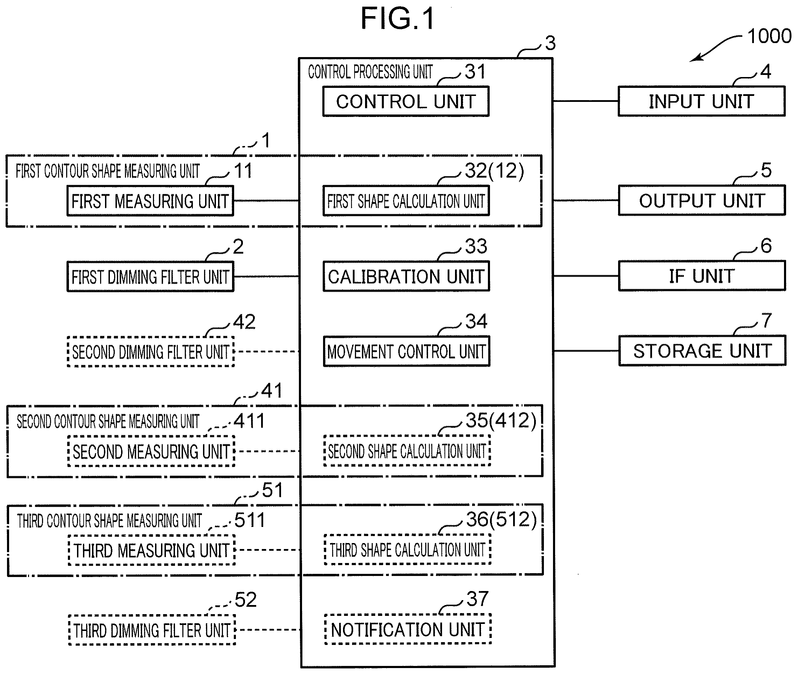

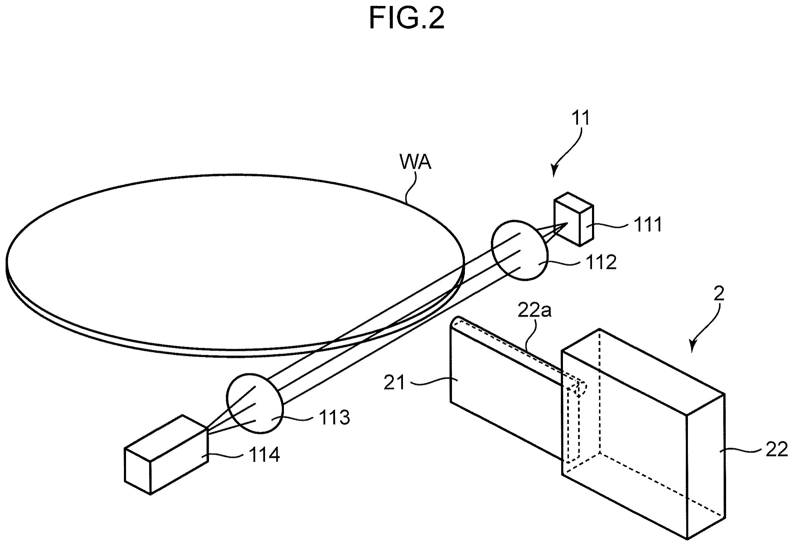

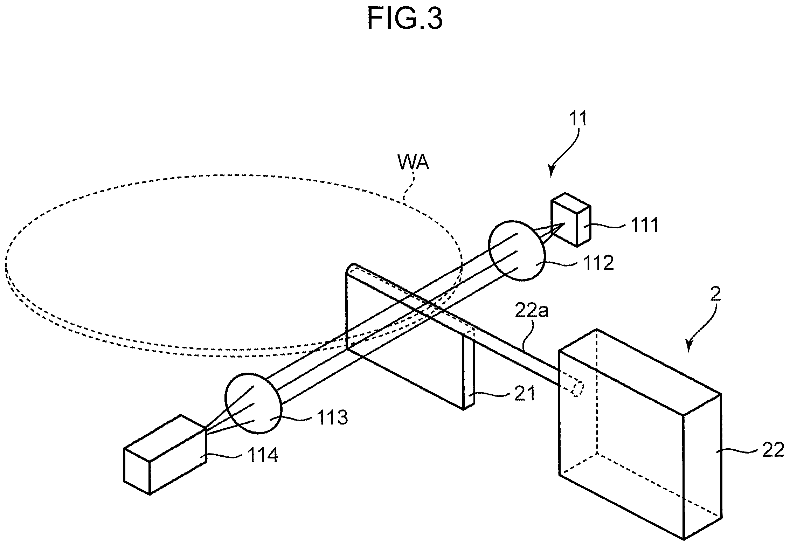

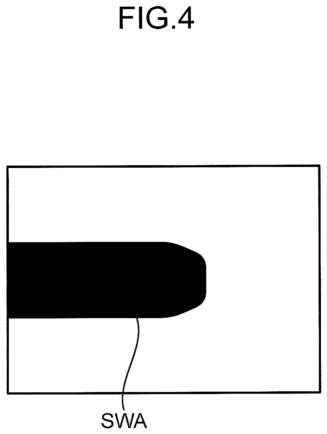

FIG. 1 is a block diagram illustrating a configuration of the shape measuring device according to the embodiment. FIG. 2 is a diagram for describing a retraction position of a dimming filter in the shape measuring device. FIG. 3 is a diagram for describing a calibration position of the dimming filter in the shape measuring device. FIG. 4 is a diagram for describing a contour shape measured by the shape measuring device as an example.

For example, as illustrated in FIGS. 1 to 3, a shape measuring device 1000 includes a first contour shape measuring unit 1, a first dimming filter unit 2, a control processing unit 3, an input unit 4, an output unit 5, an interface unit (IF unit) 6, and a storage unit 7.

The first contour shape measuring unit 1 includes an illumination unit, an imaging unit, and an image processing unit that obtains a contour shape of a plate-shaped measurement target WA disposed between the illumination unit and the imaging unit in the case of measurement, based on a shadow image of the measurement target WA, the shadow image being generated by the imaging unit imaging a shadow of the measurement target WA, the shadow being formed by illumination light emitted from the illumination unit. More specifically, in the present embodiment, the first contour shape measuring unit 1 is a device that measures the contour shape of the measurement target WA based on a shadow image based on a shadow image obtained by imaging a shadow of a peripheral edge portion, the shadow being generated by applying light onto the peripheral edge portion of the measurement target WA from a tangential direction of an outer periphery. The measurement target WA is, for example, a disk-shaped member. The contour shape is, for example, a contour shape in the thickness direction of the disk-shaped member (outer contour shape viewed from a horizontal direction (side surface) orthogonal to a normal direction of the disk), the contour shape being measured based on a shadow image SWA in the thickness direction as illustrated in FIG. 4. The measurement target WA is placed on a rotary stage (turntable), not illustrated. The first contour shape measuring unit 1 causes the rotary stage to sequentially rotate the measurement target WA at a predetermined angular interval (sampling interval), and measures each contour shape viewed from the side at each measurement point (sampling point) in a circumferential direction. The first contour shape measuring unit 1 includes, for example, a first measuring unit 11 and a first shape calculation unit 12 (32).

The first measuring unit 11 is a device that is connected to the control processing unit 3, generates a shadow of the peripheral edge portion by applying light onto the peripheral edge portion of the measurement target WA from the tangential direction of the outer periphery under the control of the control processing unit 3, and images the generated shadow of the peripheral edge portion. For example, as illustrated in FIGS. 2 and 3, the first measuring unit 11 includes an illumination unit (first illumination unit) 111, an illumination optical system 112, a light receiving optical system 113, and an imaging unit 114. The first illumination unit 111 is connected to the control processing unit 3 and emits illumination light under the control of the control processing unit 3, and includes a light source such as a white light emitting diode. The illumination optical system 112 collimates the illumination light emitted (radiated) from the first illumination unit 111 to parallel light, and includes, for example, one or a plurality of lenses. The light receiving optical system 113 forms, on an imaging surface (light receiving surface) of the imaging unit 114, an optical image of a shadow of the peripheral edge portion, the shadow being generated by applying the illumination light of the parallel light to the peripheral edge portion of the measurement target WA, and includes, for example, one or a plurality of lenses. The imaging unit 114 is connected to the control processing unit 3 and converts the optical image of the shadow of the peripheral edge portion formed on the imaging surface into an electrical signal under the control of the control processing unit 3, and includes, for example, a charge-coupled device (CCD) area image sensor or a complementary metal-oxide-semiconductor (CMOS) area image sensor. The imaging unit 114 outputs data (shadow data) obtained by this imaging to the control processing unit 3. The first illumination unit 111, the illumination optical system 112, the light receiving optical system 113, and the imaging unit 114 are disposed in this order so that their optical axes coincide with each other.

In the present embodiment, the first shape calculation unit 12 (32) is functionally implemented in the control processing unit 3 as described later, generates shadow image data that represents an image of a shadow (shadow image) of the peripheral edge portion by performing image processing (first image processing) on an output (the shadow data) from the imaging unit 114, and obtains a contour shape of the measurement target WA by performing image processing (second image processing) on the generated shadow image data. The second image processing includes, for example, 21st image processing of extracting an edge by an edge filter such as a Sobel filter, 22nd image processing of removing noise from the edge extracted in the 21st image processing by a preset luminance threshold, and 23rd image processing of obtaining a curve to be fitted to the edge after noise removal by the 22nd image processing as the shadow contour shape in units of subpixels.

In the present embodiment, in order to remove the influence of the diffraction fringes by making the background of an image white due to saturation of the amount of received light in the image sensor, the first illumination unit 111 applies illumination light of an amount having a preset set value SV exceeding a dynamic range DR of the area image sensor in the imaging unit 114. When the dynamic range DR of the area image sensor in the imaging unit 114 falls within a range of 0 ≤ DR ≤ DRu, DRu < SV holds.

The first dimming filter unit 2 is a device that is disposed between the illumination unit 111 and the imaging unit 114 in the case of calibration, reduces (dims) the amount of incident light, and ejects the light. More specifically, in the present embodiment, as illustrated in FIGS. 2 and 3, the first dimming filter unit 2 includes a dimming filter 21 and a movement driving unit 22.

The dimming filter (ND filter) 21 is an optical element that reduces (dims) the amount of incident light and ejects the light. As the dimming filter 21, any optical filter can be used as long as this filter can reduce the amount of incident light. For example, as the dimming filter 21, an optical filter in which a metal thin film is laminated on a glass substrate, an optical filter in which a light absorbing substance is mixed in a glass substrate or a resin substrate, an optical filter made of so-called frosted glass, or an optical filter in which a dielectric multilayer film is laminated on a glass substrate can be used. The dimming filter 21 may or may not have wavelength dependency in a light shielding range as long as it can cause dimming for a wavelength of the illumination light emitted from the first illumination unit 111. Transmittance RV (0 ≤ RV ≤ 1) as a ratio of transmissive light to incident light in the dimming filter 21 is appropriately set so that the light amount of the set value SV exceeding the dynamic range DR of the area image sensor in the imaging unit 114 in the case of measurement is reduced to the light amount within the dynamic range DR of the area image sensor in the case of calibration (0 ≤ SV × RV ≤ DR).

The movement driving unit 22 is a device that is connected to the control processing unit 3 and moves the dimming filter 21 between the calibration position and the retraction position under the control of the control processing unit 3. As illustrated in FIG. 3, the calibration position is a position where the dimming filter 21 is disposed between the first illumination unit 111 and the imaging unit 114, and is a position where the dimming filter 21 is located in the case of calibration. As illustrated in FIG. 2, the retraction position is a position where the dimming filter is not disposed between the first illumination unit 111 and the imaging unit, and is a position where the dimming filter 21 is located in the case of measurement. That is, the calibration position is a position where the illumination light emitted from the first illumination unit 111 is received by the imaging unit 114 via the dimming filter 21, and the retraction position is a position where the illumination light emitted from the first illumination unit 111 is received by the imaging unit 114 without via the dimming filter 21. Note that, in the case of calibration, the measurement target WA may or may not be disposed, but in FIG. 3, the measurement target WA that is not disposed is illustrated by a broken line. By overlapping the measurement target WA illustrated in FIG. 2 and the measurement target WA indicated by the broken line in FIG. 3, the calibration position and the retraction position can be compared, and a difference between these positions can be recognized.

The movement driving unit 22 may be any device as long as the dimming filter 21 can be moved between the calibration position and the retraction position, and for example, a hydraulic cylinder or an electric cylinder can be used as the movement driving unit 22. In the present embodiment, the electric cylinder 22 is used as the movement driving unit 22, and the dimming filter 21 is attached to a piston rod 22a. Alternatively, a so-called rack-and-pinion may be used as the movement driving unit 22. The dimming filter 21 is attached to the rack, and the pinion is driven by a motor. In the above description, the dimming filter 21 is moved between the calibration position and the retraction position on a linear trajectory, but the dimming filter 21 may be moved between the calibration position and the retraction position on a curved trajectory. In this case, for example, the retraction position is set at a position rotated clockwise or counterclockwise by 90 degrees from the calibration position, and the movement driving unit 22 includes, for example, a speed reducer and a motor that rotationally move the dimming filter 21.

The input unit 4 is a device that is connected to the control processing unit 3 and inputs, to the shape measuring device 1000, various commands such as a command for instructing start of measurement, and various data necessary for operating the shape measuring device 1000 such as a measurement target name. Examples of the input unit 4 are a keyboard, a mouse, and a plurality of input switches assigned with predetermined functions. The output unit 5 is a device that is connected to the control processing unit 3 and outputs commands, data, and contour shapes input from the input unit 4 under the control of the control processing unit 3. Examples of the output unit 5 are a display device, such as a cathode ray tube (CRT) display, a liquid crystal display (LCD), or an organic electroluminescence (EL) display, and a printing device such as a printer.

Note that the input unit 4 and the output unit 5 may be constituted by a touch panel. In a case where the touch panel is constituted, the input unit 4 is a position input device adopting a resistance film system or a capacitive system, for example, that detects and inputs operation positions. The output unit 5 is a display device. In this touch panel, the position input device is provided on a display surface of the display device, and one or a plurality of input content candidates that can be input are displayed on the display device. When a user touches a display position where an input content desired to be input is displayed, the position input device detects the touched position, and the display content displayed at the detected position is input to the shape measuring device 1000 as a user's operation input content. In such a touch panel, since the user can easily and intuitively understand the input operation, the shape measuring device 1000 that is easy for the user to handle is provided.

The IF unit 6 is a circuit that is connected to the control processing unit 3 and inputs or outputs data to or from an external device under the control of the control processing unit 3. Examples of the IF unit 6 are an interface circuit of RS-232C which is a serial communication system, an interface circuit using the Bluetooth (registered trademark) standard, and an interface circuit using the Universal Serial Bus (USB) standard. Further, the IF unit 6 may be a communication interface circuit, such as a data communication card, or a communication interface circuit according to the IEEE 802.11 standard. The communication interface circuit transmits and receives a communication signal with an external device.

The storage unit 7 is a circuit that is connected to the control processing unit 3 and stores various predetermined programs and various predetermined data under the control of the control processing unit 3. The various predetermined programs include, for example, a control processing program, and the control processing program includes, for example, a control program, a first shape calculation program, a calibration program, and a movement control program. The control program controls each of the units 1, 2 and 4 to 7 of the shape measuring device 1000 in accordance with a function of each unit. The first shape calculation program generates the shadow image data by performing the first image processing on the shadow data output from the imaging unit 114 and obtains the contour shape of the measurement target WA by performing the second image processing on the generated shadow image data. The calibration program calibrates the amount of illumination light emitted from the first illumination unit 111, based on the light receiving amount of the illumination light emitted from the first illumination unit 111, the illumination light being received by the imaging unit 114 via the dimming filter unit 2. The movement control program controls the movement driving unit 22 of the dimming filter unit 2 so that the dimming filter 21 is positioned at the calibration position in the case of calibration and the dimming filter 21 is positioned at the retraction position in the case of measurement.

The various predetermined data include, for example, data necessary for executing respective programs related to a measurement target name, the set value SV which is a target light amount of the illumination light emitted from the first illumination unit 111, the dimming amount RV of the dimming filter 21, an adjustment amount △i for adjusting a current value at the time of calibration, and respective data and a contour shape during information processing. The set value SV and the adjustment amount △i are appropriately set in advance by selecting from, for example, a plurality of samples.

The storage unit 7 includes a read only memory (ROM) that is a nonvolatile storage element, and an electrically erasable programmable read only memory (EEPROM) that is a rewritable nonvolatile storage element. The storage unit 7 includes a random access memory (RAM) serving as a so-called working memory of the control processing unit 3, the working memory storing data and the like generated during execution of the predetermined programs. Furthermore, the storage unit 7 may include a hard disk device having a relatively large storage capacity.

The control processing unit 3 is a circuit that controls each of the units 1, 2, and 4 to 7 of the shape measuring device 1000 according to the function of each unit to obtain the contour shape of the measurement target WA. The control processing unit 3 includes, for example, a central processing unit (CPU) and its peripheral circuits. In the control processing unit 3, a control unit 31, the first shape calculation unit 32 (12), a calibration unit 33, and a movement control unit 34 are functionally implemented by executing the control processing programs.

The control unit 31 controls each of the units 1, 2, and 4 to 7 of the shape measuring device 1000 according to the function of each unit, and generally controls the shape measuring device 1000.

As described above, the first shape calculation unit 32 (12) generates the shadow image data by performing the first image processing on the shadow data output from the imaging unit 114, and obtains the contour shape in the thickness direction of the measurement target WA by performing the second image processing on the generated shadow image data.

The calibration unit 33 calibrates the amount of illumination light emitted from the first illumination unit 111, based on the light receiving amount of the illumination light emitted from the first illumination unit 111, the illumination light being received by the imaging unit 114 via the dimming filter 21 of the dimming filter unit 2.

The movement control unit 34 controls the movement driving unit 22 of the dimming filter unit 2 so that the dimming filter 21 is positioned at the calibration position in the case of calibration and the dimming filter 21 is positioned at the retraction position in the case of measurement.

More specifically, first, the movement control unit 34 causes the movement driving unit 22 to position the dimming filter 21 at the calibration position. Subsequently, the control unit 31 energizes the first illumination unit 111 with a current of a current value (a default (initial value) current value in the first time) ic adjusted in the previous calibration to emit illumination light from the first illumination unit 111, and causes the area image sensor of the imaging unit 114 to receive the emitted illumination light via the dimming filter 21. In the area image sensor of the imaging unit 114, a plurality of light receiving elements are set in advance for calculation of the amount of received light MV in a range (light receiving range) where the illumination light via the dimming filter 21 is received. Subsequently, the calibration unit 33 obtains an average value of respective outputs in the plurality of light receiving elements as the amount of received light MV, and adds a dimming amount RV of the dimming filter 21 to the obtained amount of received light MV, thereby obtaining a true light amount TV (= MV + RV) of the illumination light emitted from the first illumination unit 111. The calibration unit 33 then compares the obtained true light amount TV of the illumination light with the set value SV, and determines, for example, whether the true light amount TV of the illumination light matches the set value SV within a predetermined range (margin) set in advance. If they match, the calibration unit 33 ends the calibration processing. On the other hand, if they do not match and the true light amount TV of the illumination light is smaller than the set value SV, the current value ic is updated by adding the adjustment amount △i to the current value ic (ic←ic + △i). If they do not match and the true light amount TV of the illumination light is larger than the set value SV, the current value ic is updated by subtracting the adjustment amount △i from the current value ic (ic←ic - △i). With this updated current value ic, similarly to the above, each processing of emission of the illumination light from the first illumination unit 111, reception of the illumination light by the area image sensor of the imaging unit 114, calculation of the true light amount TV of the illumination light, comparison between the true light amount TV of the illumination light and the set value SV, and update of the current value ic in accordance with the comparison result is performed, and the processing is repeated until the comparison results match. When the calibration processing ends, the calibration unit 33 stores the current value ic at that time in the storage unit 7 as the current value adjusted in this calibration (in the case where no update is performed, the current value ic adjusted in the previous calibration is stored in the storage unit 7 as the current value adjusted in the this calibration, and in the case where update is performed, the updated current value ic is stored in the storage unit 7 as the current value adjusted in this calibration). The movement control unit 34 causes the movement driving unit 22 to position the dimming filter 21 at the retraction position.

The control processing unit 3, the input unit 4, the output unit 5, the IF unit 6, and the storage unit 7 can be configured by a desktop computer, a notebook computer, or the like.

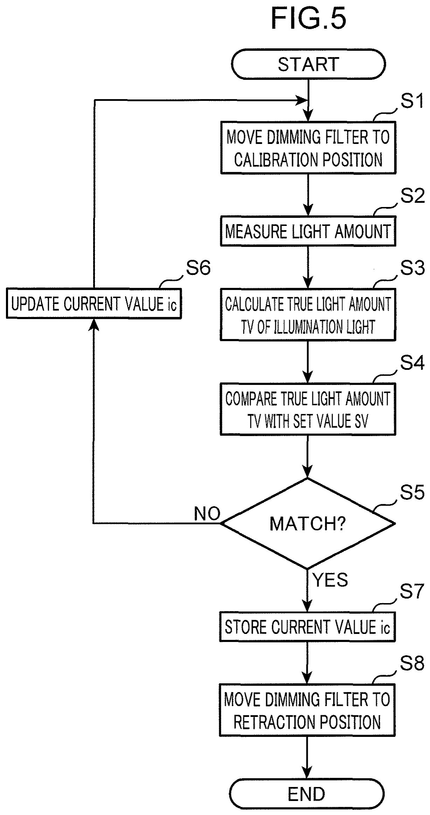

Next, the operation according to the present embodiment will be described. FIG. 5 is a flowchart showing an operation of the shape measuring device related to calibration.

When the shape measuring device 1000 having such a configuration is powered on, necessary units are initialized, and starts the operations of the units. In the control processing unit 3, the control unit 31, the first shape calculation unit 32 (12), the calibration unit 33, and the movement control unit 345 are functionally implemented by executing the control processing programs.

For example, when the input unit 4 accepts a command instructing the start of the calibration, in FIG. 5, in the shape measuring device 1000, the movement control unit 34 of the control processing unit 3 causes the movement driving unit 22 to move to and position the dimming filter 21 at the calibration position (S1).

Subsequently, in the shape measuring device 1000, the control unit 31 of the control processing unit 3 causes the first illumination unit 111 to emit illumination light with the current of the current value ic stored in the storage unit 7, and causes the area image sensor of the imaging unit 114 to receive the emitted illumination light via the dimming filter 21 (S2).

In the shape measuring device 1000 then, the calibration unit 33 of the control processing unit 3 obtains the amount of received light MV to obtain the true light amount TV (= MV + RV) of the illumination light (S3).

In the shape measuring device 1000, the calibration unit 33 compares the obtained true light amount TV of the illumination light with the set value SV (S4).

In the shape measuring device 1000, the calibration unit 33 determines, based on the compared result, whether the true light amount TV of the illumination light matches the set value SV within the predetermined range (S5). If the determined result is mismatch, the shape measuring device 1000 executes processing S6 whereas if the result is match, executes processing S7.

In the processing S6, in the shape measuring device 1000, in a case where the true light amount TV of the illumination light is smaller than the set value SV, the calibration unit 33 adds the adjustment amount △i to the current value ic to update the current value ic (ic←ic + △i). In a case where the true light amount TV of the illumination light is larger than the set value SV, the calibration unit 33 subtracts the adjustment amount △i from the current value ic to update the current value ic (ic←ic - △i). Thereafter, the processing returns to the processing S2.

In the processing S7, in the shape measuring device 1000, the calibration unit 33 stores the current value ic at that time in the storage unit 7 as the current value adjusted in this calibration.

In the shape measuring device 1000, the movement control unit 34 of the control processing unit 3 causes the movement driving unit 22 to move to and position the dimming filter 21 at the retraction position (S8), and the processing ends.

As described above, the shape measuring device 1000 and the method for calibrating a shape measuring device mounted on the shape measuring device 1000 according to the embodiment include the dimming filter unit 2 that reduces the amount of incident light and emits the light. Therefore, even in a case where calibration is performed by adjusting the amount of illumination light emitted from the first illumination unit 111 to the set value SV exceeding the dynamic range DR of the imaging unit 114, the light amount can be calibrated by the dimming filter unit 2 to dim light so as to be within the dynamic range DR of the imaging unit 114.

According to the present embodiment, it is possible to provide the shape measuring device 1000 that calibrates the amount of illumination light emitted from the first illumination unit 111 so that the amount of received light MV received by the imaging unit 114 becomes a predetermined light amount set in advance, for example, a light amount with which the light receiving elements are saturated beyond the dynamic range DR of the area image sensor in the imaging unit 114.

Since the shape measuring device 1000 includes the movement driving unit 22 that moves the dimming filter 21 between the calibration position and the retraction position, the dimming filter 21 can be automatically moved between the calibration position and the retraction position in the case of calibration and in the case of measurement.

In the above embodiment, the dimming filter 21 is moved between the calibration position and the retraction position by the movement driving unit 22, but a jig (mounting jig) for attaching and detaching the dimming filter 21 may be provided at the calibration position. The dimming filter 21 may be attached to the mounting jig by a user (operator) in the case of calibration, and the dimming filter 21 may be detached from the mounting jig by the user in the case of measurement (a first modification).

In the above-described embodiment (including the first modification), the shape measuring device 1000 may further include a notification unit 37 that, when the current value i of the current flowing through the first illumination unit 111 after calibration exceeds a preset threshold (alarm notification threshold) ith based on a maximum rated current value imax of the first illumination unit 111, notifies the outside of an alarm about this state (a second modification). For example, as a program included in the control processing program, a notification program is stored in the storage unit 7. The notification program is for, when the current value i of the current flowing through the first illumination unit 111 after calibration exceeds the alarm notification threshold ith based on the maximum rated current value imax of the first illumination unit 111, notifying the outside of the alarm about this state. Such a notification unit 37 is functionally implemented in the control processing unit 3 as indicated by a broken line in FIG. 1 by executing the control processing program. The alarm notification threshold ith is appropriately set to, for example, 85%, 90%, or 95% of the maximum rated current value imax. When the above processing S7 is performed, the notification unit 37 determines whether the current value ic adjusted by this calibration exceeds the alarm notification threshold ith. When the current value ic exceeds the alarm notification threshold ith as a result of the determination, a message prompting the replacement of the light source of the first illumination unit 111 such as "replacement of the illumination light source is recommended" is output from the output unit 5 as the alarm. Alternatively, for example, the alarm may be notified by turning on alarm light or issuing an alarm sound.

The amount of illumination light emitted from the first illumination unit 111 generally decreases due to aging. Since the light amount increases as the power supply amount increases, the current value ic of the current flowing through the first illumination unit 111 is increased at a constant voltage in order to compensate for the reduced light amount. Therefore, the current value ic of the current flowing through the first illumination unit 111 eventually exceeds the maximum rated current value imax of the first illumination unit 111, and the first illumination unit 111 fails. When the current value ic exceeds the alarm notification threshold ith, the shape measuring device 1000 according to the second modification notifies an alarm to the outside, thus taking measures such as replacement of the light emitting elements of the light source before the first illumination unit 111 fails.

Further, in the above-described embodiment (including the first and second modifications), the shape measuring device 1000 may be further configured to measure a contour shape in a circumferential direction of a disk-shaped member as the measurement target, or may be configured to measure a contour shape of a notch of a disk-shaped member as the measurement target, the notch being formed at a predetermined position in the circumferential direction of the disk-shaped member (a third modification). Either one configuration may be further provided to the shape measuring device 1000, but here, a case where both the configurations are further provided to the shape measuring device 1000 will be described more specifically.

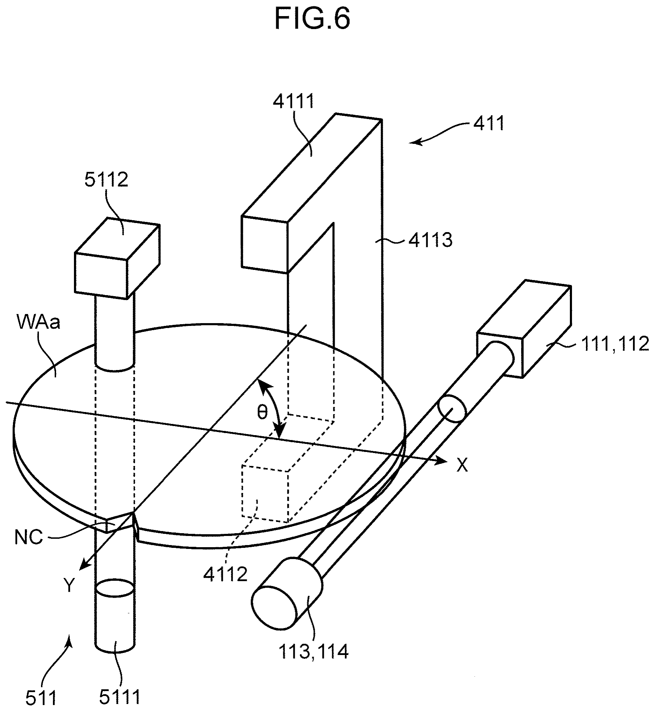

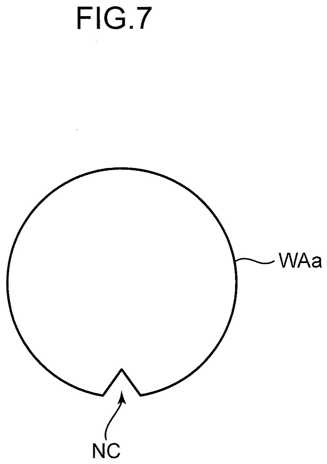

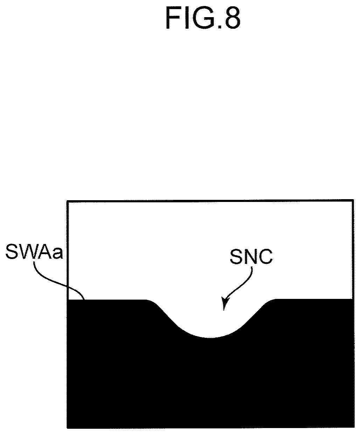

FIG. 6 is a diagram for describing a shape measuring device according to a third modification. Note that, in FIG. 6, illustration of the first to third dimming filter units 2, 42, and 52 is omitted, and is not illustrated. FIG. 7 is a diagram for describing a measurement target measured by the shape measuring device according to the third modification. FIG. 8 is a diagram for describing a contour shape measured by the shape measuring device according to the third modification as an example.

As indicated by the broken line in FIG. 1, the shape measuring device 1000 according to the third modification further includes a second contour shape measuring unit 41, a second dimming filter unit 42, a third contour shape measuring unit 51, and a third dimming filter unit 52.

Here, for example, as illustrated in FIG. 7, a measurement target WAa is a disk-shaped member having an approximately "V"-shaped notch NC at a predetermined position in the circumferential direction. In a case where the measurement target WAa is a semiconductor wafer, its crystal orientation is indicated by the notch NC.

The second contour shape measuring unit 41 is a device that measures a contour shape in the circumferential direction of the measurement target WAa (an outer contour shape viewed from the normal direction of the disk), and includes, for example, a second measuring unit 411 and a second shape calculation unit 412 (35).

The second measuring unit 411 is a device that is connected to the control processing unit 3 and measures the position of the peripheral edge of the measurement target WAa by irradiating the measurement target WAa with predetermined illumination light from the thickness direction of the measurement target WAa under the control of the control processing unit 3. The second measuring unit 411 measures each position of the peripheral edge at a plurality of different measurement points along a circumferential direction θ of the measurement target WAa.

For example, as illustrated in FIG. 6, the second measuring unit 411 includes an illumination unit (second illumination unit) 4111 that irradiates the measurement target WAa with illumination light linearly from the thickness direction along a radial direction, a light receiving unit 4112 that receives the illumination light emitted from the second illumination unit 4111 via the measurement target WAa, and a holding unit 4113 that holds the second illumination unit 4111 and the light receiving unit 4112 to face each other with a predetermined interval. The second illumination unit 4111, the holding unit 4113, and the light receiving unit 4112 have an approximately U-shape (shape obtained by removing "-" at the center in an E shape) in a side view. Therefore, the light receiving unit 412 is disposed to face the second illumination unit 4111. The second illumination unit 4111 includes, for example, a device or the like that collimates light radiated from a light source with a collimator lens, sets the parallel light as slit light along a radial direction r through a slit hole of a plate-shaped member, the slit hole having a rectangular shape and being elongated in one direction, and irradiates the measurement target WAa with the slit light as the illumination light. The light receiving unit 4112 includes a line sensor, an area image sensor, or the like wider than the slit hole. In the second measuring unit 411 including the second illumination unit 4111 and the light receiving unit 4112, the measurement target WAa is disposed with respect to the second measuring unit 411 with the radial direction r being along the one direction. Alternatively, for example, the second illumination unit 4111 is a device that irradiates the measurement target WAa with laser light radiated from the light source as the illumination light while scanning the measurement target WAa in the radial direction r, and the light receiving unit 4112 includes a line sensor, an area image sensor, or the like wider than the laser light. In the second measuring unit 411 including the second illumination unit 4111 and the light receiving unit 4112, the measurement target WAa is disposed with respect to the measuring unit 1 with the radial direction r being along the scanning direction. The holding unit 4113 is, for example, a columnar member extending in one direction, and holds the second illumination unit 4111 and the light receiving unit 4112 so as to extend in a direction orthogonal to the one direction at both ends of the columnar member.

In the third modification, the second shape calculation unit 412 (35) is functionally implemented in the control processing unit 3, and obtains, for each of the plurality of measurement points, the position of the peripheral edge of the measurement target WAa at the corresponding measurement point based on the output from the light receiving unit 4112, and obtains a contour shape in the circumferential direction of the measurement target WAa based on each position of the peripheral edge of the measurement target WAa, each position being obtained at each of the plurality of measurement points. Since the linear illumination light emitted from the second illumination unit 4111 is shielded by the measurement target WAa, for example, by determining pixels having luminance equal to or higher than a preset peripheral edge position determination threshold, these pixels being selected from pixels having luminance lower than the predetermined threshold (peripheral edge position determination threshold), the positions of the pixels having luminance being switched are obtained as the position of the peripheral edge of the measurement target WAa, and a distance L1 from one end (end close to the center of the measurement target WAa) of the linear illumination light to the peripheral edge of the measurement target WAa is obtained. In principle, since a distance L2 from the center of the rotary stage, not illustrated, (the center of the measurement target WAa) to one end of the linear illumination light is known in advance, a distance L3 (= L1 + L2) from the center of the measurement target WAa to the peripheral edge of the measurement target WAa is obtained by adding the distance L2 to the distance L1. By obtaining the distance L3 for each of the plurality of measurement points, the contour shape in the circumferential direction of the measurement target WAa is obtained.

Since the second dimming filter unit 42 is similar to the first dimming filter unit 2 except that the second dimming filter unit 42 is disposed with respect to the second contour shape measuring unit 41 so that the calibration position is set between the second illumination unit 4111 and the light receiving unit 4112, the description thereof will be omitted.

The calibration unit 33 further calibrates the amount of illumination light emitted from the second illumination unit 4111, based on the light receiving amount of the illumination light emitted from the second illumination unit 4111, the illumination light being received by the light receiving unit 4112 via the second dimming filter unit 42. The calibration program further includes a program for calibrating the amount of illumination light emitted from the second illumination unit 4111, based on the light receiving amount of the illumination light emitted from the second illumination unit 4111, the illumination light being received by the light receiving unit 4112 via the second dimming filter unit 42.

The storage unit 7 stores, as a program included in the control processing program, a second shape calculation program for obtaining a position of the peripheral edge of the measurement target WAa at each of the plurality of measurement points based on the output from the light receiving unit 4112, and obtaining a contour shape in the circumferential direction of the measurement target WAa based on each position of the peripheral edge of the measurement target WAa, each position being obtained at corresponding one of the plurality of measurement points. The second shape calculation unit 35 (412) is functionally implemented in the control processing unit 3 by executing the control processing program.

The third contour shape measuring unit 51 is a device that measures a contour shape of the notch NC of the measurement target WAa (the outer contour shape of the notch NC viewed from the normal direction of the disk), and includes, for example, a third measuring unit 511 and a third shape calculation unit 512 (36). The third measuring unit 511 is similar to the first measuring unit 11 except that light is applied to the peripheral edge portion of the measurement target WA from the thickness direction of the measurement target WA. That is, the third measuring unit 511 includes an illumination unit 5111 including an illumination unit and an illumination optical system respectively similar to the first illumination unit 111 and the illumination optical system 112, and a light receiving unit 5112 including a light receiving optical system and an imaging unit respectively similar to the light receiving optical system 113 and the imaging unit 114. Since the third shape calculation unit 512 (36) is similar to the first shape calculation unit 32 (12) except that the output from the imaging unit of the light receiving unit 5112 is used, the description thereof will be omitted.

Since the third dimming filter unit 52 is similar to the first dimming filter unit 2 except that the third dimming filter unit 52 is disposed with respect to the third contour shape measuring unit 51 so that the calibration position is set between the illumination unit 5111 and the light receiving unit 5112, the description thereof will be omitted.

The calibration unit 33 further calibrates the amount of illumination light emitted from the illumination unit 5111, based on the light receiving amount of the illumination light emitted from the illumination unit, the illumination light being received by the light receiving unit 5112 via the third dimming filter unit 52. The calibration program further includes a program for calibrating the amount of illumination light emitted from the illumination unit 5111, based on the light receiving amount of the illumination light emitted from the illumination unit, the illumination light being received by the light receiving unit 5112 via the third dimming filter unit 52.

The storage unit 7 stores a third shape calculation program similar to the first shape calculation program as a program included in the control processing program. The third shape calculation unit 36 (512) is functionally implemented in the control processing unit 3 by executing the control processing program.

The present specification discloses various aspects of techniques as described above, and the main techniques of the disclosed aspects are summarized below.

A shape measuring device according to one aspect is a device including an illumination unit, an imaging unit, and an image processing unit that obtains a contour shape of a measurement target having a plate shape based on a shadow image of the measurement target disposed between the illumination unit and the imaging unit in a case of measurement, the shadow image being generated by the imaging unit imaging a shadow of the measurement target, the shadow being formed by illumination light emitted from the illumination unit, the shape measuring device includes a dimming filter unit disposed between the illumination unit and the imaging unit in a case of calibration, and a calibration unit that calibrates an amount of illumination light emitted from the illumination unit, based on a light receiving amount of the illumination light emitted from the illumination unit, the illumination light being received by the imaging unit via the dimming filter unit.

Such a shape measuring device includes the dimming filter unit that reduces the amount of incident light and emits the light. Therefore, even in a case where calibration is performed by adjusting the amount of illumination light emitted from the illumination unit to the set value exceeding the dynamic range of the imaging unit, the light amount can be calibrated by the dimming filter unit performing dimming so as to be within the dynamic range of the imaging unit.

In the shape measuring device according to another aspect, the calibration unit adjusts the illumination unit so that an amount of received light received by the imaging unit is a predetermined light amount set in advance to calibrate the amount of the illumination light emitted from the illumination unit.

This can provide the shape measuring device that calibrates the amount of the illumination light emitted from the illumination unit so that the amount of received light received by the imaging unit is a predetermined light amount set in advance.

The shape measuring device according to another aspect further includes a notification unit that notifies an outside of an alarm when a current value of a current flowing through the illumination unit after calibration exceeds a threshold set in advance based on a maximum rated current value of the illumination unit.

The amount of illumination light emitted from the illumination unit generally decreases due to aging. For this reason, in order to compensate for the reduced light amount, the current value of the current flowing through the illumination unit is increased. Therefore, the current value of the current flowing through the illumination unit eventually exceeds the maximum rated current value of the illumination unit, and the illumination unit fails. When the current value exceeds the threshold, the shape measuring device notifies an alarm about this state to the outside, and thus a countermeasure such as replacement of the light emitting elements can be taken before the failure of the illumination unit.

In the shape measuring device according to another aspect, the dimming filter unit includes a dimming filter and a movement driving unit that moves the dimming filter between a calibration position and a retraction position, the calibration position is a position where the dimming filter is disposed between the illumination unit and the imaging unit, and the retraction position is a position where the dimming filter is not disposed between the illumination unit and the imaging unit.

Since the shape measuring device includes the movement driving unit that moves the dimming filter between the calibration position and the retraction position, the dimming filter can be automatically moved between the calibration position and the retraction position in the case of calibration and in the case of measurement.

A method for calibrating a shape measuring device according to another aspect, the device including an illumination unit, an imaging unit, and an image processing unit that obtains a contour shape of a measurement target having a plate shape based on a shadow image of the measurement target disposed between the illumination unit and the imaging unit in a case of measurement, the shadow image being generated by the imaging unit imaging a shadow of the measurement target, the shadow being formed by illumination light emitted from the illumination unit. The method includes disposing a dimming filter between the illumination unit and the imaging unit in a case of calibration, and calibrating an amount of illumination light emitted from the illumination unit, based on a light receiving amount of the illumination light emitted from the illumination unit, the illumination light being received by the imaging unit via the dimming filter.

With the method for calibrating the shape measuring device, the dimming filter that reduces the amount of incident light and emits the light is disposed between the illumination unit and the imaging unit in the case of calibration. Therefore, even in a case where calibration is performed by adjusting the amount of illumination light emitted from the illumination unit to the set value exceeding the dynamic range of the imaging unit, the light amount can be calibrated by the dimming filter performing dimming so as to be within the dynamic range of the imaging unit.

In the method for calibrating the shape measuring device according to another aspect, the measurement target is a disk-shaped member, and the contour shape is a contour shape in a thickness direction of the disk-shaped member.

This can provide the method for calibrating the shape measuring device that measures the contour shape in the thickness direction of the disk-shaped member.

In the method for calibrating the shape measuring device according to another aspect, the measurement target is a disk-shaped member, and the contour shape is a contour shape in a circumferential direction of the disk-shaped member.

This can provide the method for calibrating the shape measuring device that measures the contour shape in the circumferential direction of the disk-shaped member.

In the method for calibrating the shape measuring device according to another aspect, the measurement target is a disk-shaped member having a notch at a predetermined position in a circumferential direction, and the contour shape is a contour shape of the notch.

This can provide the method for calibrating the shape measuring device that measures the contour shape of the notch.

This application is based on Japanese Patent Application No. 2023-108156 filed on June 30, 2023, the content of which is included in the present application.

Although the present invention has been appropriately and sufficiently described through the embodiments with reference to the above drawings to express the present invention, it should be recognized that a person skilled in the art can easily modify and/or improve the above-described embodiments. Therefore, unless a modification or improvement made by a person skilled in the art is at a level departing from the scope of rights of the claims described in the claims, the modification or improvement is interpreted to be included in the scope of rights of the claims.

### Industrial Applicability

According to the present invention, it is possible to provide a shape measuring device that measures a contour shape of a plate-shaped measurement target using illumination light and a method for calibrating the shape measuring device.

## Claims

1. shape measuring device including an illumination unit, an imaging unit, and an image processing unit that obtains a contour shape of a measurement target having a plate shape based on a shadow image of the measurement target disposed between the illumination unit and the imaging unit in a case of measurement, the shadow image being generated by the imaging unit imaging a shadow of the measurement target, the shadow being formed by illumination light emitted from the illumination unit, the shape measuring device comprising:
a dimming filter unit disposed between the illumination unit and the imaging unit in a case of calibration; and
a calibration unit that calibrates an amount of illumination light emitted from the illumination unit, based on a light receiving amount of the illumination light emitted from the illumination unit, the illumination light being received by the imaging unit via the dimming filter unit.

2. The shape measuring device according to claim 1, wherein the calibration unit adjusts the illumination unit so that the light receiving amount of the illumination light received by the imaging unit is a predetermined light amount set in advance to calibrate the amount of the illumination light emitted from the illumination unit.

3. The shape measuring device according to claim 1, further comprising a notification unit that notifies an outside of an alarm when a current value of a current flowing through the illumination unit after calibration exceeds a threshold set in advance based on a maximum rated current value of the illumination unit.

4. The shape measuring device according to claim 1, wherein the dimming filter unit includes a dimming filter and a movement driving unit that moves the dimming filter between a calibration position and a retraction position, the calibration position is a position where the dimming filter is disposed between the illumination unit and the imaging unit, and the retraction position is a position where the dimming filter is not disposed between the illumination unit and the imaging unit.

5. method for calibrating a shape measuring device, the device including an illumination unit, an imaging unit, and an image processing unit that obtains a contour shape of a measurement target having a plate shape based on a shadow image of the measurement target disposed between the illumination unit and the imaging unit in a case of measurement, the shadow image being generated by the imaging unit imaging a shadow of the measurement target, the shadow being formed by illumination light emitted from the illumination unit, the method comprising:
disposing a dimming filter between the illumination unit and the imaging unit in a case of calibration; and
calibrating an amount of illumination light emitted from the illumination unit, based on a light receiving amount of the illumination light emitted from the illumination unit, the illumination light being received by the imaging unit via the dimming filter.

6. The method for calibrating the shape measuring device according to claim 5, wherein
the measurement target is a disk-shaped member, and
the contour shape is a contour shape in a thickness direction of the disk-shaped member.

7. The method for calibrating the shape measuring device according to claim 5, wherein
the measurement target is a disk-shaped member, and
the contour shape is a contour shape in a circumferential direction of the disk-shaped member.

8. The method for calibrating the shape measuring device according to claim 5, wherein
the measurement target is a disk-shaped member having a notch at a predetermined position in a circumferential direction, and
the contour shape is a contour shape of the notch.
